# EUROPEAN PATENT APPLICATION

(11) **EP 4 726 183 A1**
(43) Date of publication of application: **15.04.2026**
(21) Application number: 24205372.6
(22) Date of filing: 08.10.2024
(51) Int. Cl.: F01P 3/00, B60K 11/02, F01P 11/00, F01P 11/04

(54) **INTERFACE MEMBER FOR A COOLING SYSTEM**

(71) Applicant: Volvo Penta Corporation, 405 08 Göteborg (SE)
(72) Inventor: BROQVIST, Andreas, GÖTEBORG (SE); ANDERSSON, Viktor, GÖTEBORG (SE)
(74) Representative: Ström & Gulliksson AB

(57) **Abstract**

Present disclosure relates to an interface member for a cooling system for cooling at least one thermally managed component intended to form a part of a powertrain system, the interface member comprising a support mounting interface configured to be mounted to a support structure for supporting the interface member, a body portion provided with one or more internal integrated coolant channels for forming at least a portion of a cooling circuitry of the cooling system, a coolant connection interface in fluid communication with the one or more integrated coolant channel and configured to be releasably connected to one or more cooling system components of the cooling system connected to the cooling circuitry for coolant distribution between the one or more cooling system components and the cooling circuitry, and a component mounting interface for mounting of one or more component associated with the powertrain system.

## Description

### TECHNICAL FIELD

The disclosure relates generally to cooling systems. In particular aspects, the disclosure relates to an interface member for a cooling system. The disclosure can be applied powertrain systems for example to powertrains of vehicles, e.g. heavy-duty vehicles, such as trucks, buses, and construction equipment, among other vehicle types. The disclosure may also be applied to for example marine vessel, power take off systems, industrial motor systems etc. Although the disclosure may be described with respect to a particular type of powertrain system, the disclosure is not restricted to any particular powertrain system.

### BACKGROUND

In modern powertrain systems, efficient thermal management is crucial to ensure optimal performance, reliability, and longevity of various components. These systems often include high-powered electronic devices, mechanical components, and other critical elements that generate substantial amounts of heat during operation. Consequently, effective cooling solutions are imperative to prevent overheating, component failure, and potential safety hazards.

Traditional cooling systems in powertrain applications typically involve multiple discrete components connected through a series of external piping or tubing. These systems often suffer from several significant drawbacks that hinder their overall efficiency and reliability.

One primary issue with existing cooling solutions is their complexity and the number of individual parts involved. The need for multiple connections and interfaces increases the risk of leaks, pressure drops, and malfunctions. The intricacy of assembling these systems also leads to higher installation costs and longer assembly times, which are undesirable in manufacturing processes that prioritize efficiency and cost-effectiveness.

Another notable disadvantage of conventional cooling systems is their lack of integration and modularity. The separate components and their connections make it challenging to achieve a compact and streamlined design. This can result in space constraints within the powertrain system, making it difficult to accommodate other necessary components or to maintain a desirable form factor.

Additionally, maintenance and servicing of these conventional cooling systems can be cumbersome and time-consuming. The multitude of connections and interfaces requires careful inspection and potential replacement of several parts during routine maintenance. This increases downtime and operational costs, further exacerbating the inefficiencies of these systems.

In summary, there is a clear need for an improved cooling solution that addresses the limitations of prior art systems.

### SUMMARY

According to a first aspect an interface member for a cooling system for cooling at least one thermally managed component intended to form a part of a powertrain system is provided. The interface member comprises a support mounting interface configured to be mounted to a support structure for supporting the interface member, a body portion provided with one or more internal integrated coolant channels for forming at least a portion of a cooling circuitry of the cooling system, a coolant connection interface in fluid communication with the one or more integrated coolant channels and configured to be releasably connected to one or more cooling system components of the cooling system connected to the cooling circuitry for coolant distribution between the one or more cooling system components and the cooling circuitry, and a component mounting interface for mounting of one or more components associated with the powertrain system. The first aspect of the disclosure may seek to address the complexity of traditional cooling systems by providing solution allowing for a modular system. A technical benefit may include simplifying the assembly and maintenance process over traditional systems that rely on multiple discrete components and external piping.

Optionally in some examples, including in at least one preferred example, the coolant connection interface may be configured to be releasably connected to two or more cooling system components of the cooling system such that coolant is distributed between the one or more cooling system components via at least one of the one or more integrated coolant channels. A technical benefit may include improved flexibility in connecting multiple cooling components, enhancing overall system adaptability.

Optionally in some examples, including in at least one preferred example, the component mounting interface may be configured to support at least one of the one or more cooling system components. A technical benefit may include providing a modular system enabling easy installation and service.

Optionally in some examples, including in at least one preferred example, the component mounting interface may be configured to support at least one thermally managed component configured to be cooled by means of the cooling system. A technical benefit may include providing a modular cooling system enabling easy installation and service.

Optionally in some examples, including in at least one preferred example, the component mounting interface may be configured to support at least one component associated with the operation of the powertrain system. A technical benefit may include enhancing the integration of various powertrain components, simplifying system design and maintenance.

Optionally in some examples, including in at least one preferred example, the one or more components associated with the powertrain system may comprise a control unit, a pump, a compressor, a power converter unit, an on board charger unit and/or an electrical power supply and/or a heat exchanger. A technical benefit may include providing mounting options for various components, enhancing modularity, assembling and service.

Optionally in some examples, including in at least one preferred example, the interface member may further comprise sensor circuitry mounted to the body portion and configured to monitor the operation of the cooling system. A technical benefit may include enabling real-time monitoring and diagnostics in a more non-complex and simple manner.

Optionally in some examples, including in at least one preferred example, the coolant connection interface may comprise a plurality of coolant connections configured to be releasably connected to the one or more cooling system components of the cooling system. A technical benefit may include facilitating interconnection of multiple cooling system components in a modular manner.

Optionally in some examples, including in at least one preferred example, the coolant connections may comprise sealing arrangements configured to provide a sealed connection between said coolant connection and the cooling system component. A technical benefit may include preventing leaks and maintaining system integrity.

Optionally in some examples, including in at least one preferred example, the plurality of coolant connections may be configured to form a part of a male-female fluid connection and/or a quick fluid connection. A technical benefit may include simplifying the connection process, reducing installation time and effort.

Optionally in some examples, including in at least one preferred example, each integrated coolant channel may be connected to a first and second coolant connection configured to be releasably connected to a cooling system component. A technical benefit may include providing a simple manner of interconnecting cooling system components.

Optionally in some examples, including in at least one preferred example, the body portion may be provided with a plurality of integrated coolant channels each being connected to a first and second coolant connection configured to be releasably connected to a cooling system component such that a plurality of cooling system components are selectively connectable to the coolant connection interface. A technical benefit may include allowing for flexible configuration and optimization of the cooling system layout.

Optionally in some examples, including in at least one preferred example, the body portion may be provided with at least one pump inlet connected to at least one coolant connection and configured to form an inlet of a pump to be mounted to the component mounting interface. A technical benefit may include integrating pump connections, simplifying system design and assembling as well as space consumption.

Optionally in some examples, including in at least one preferred example, wherein the body portion is provided with at least one pump outlet connected to the at least one coolant connection and configured to form an outlet of a pump. A technical benefit may include integrating pump connections, simplifying system design and assembling as well as space consumption.

Optionally in some examples, including in at least one preferred example, the component mounting interface may be configured to form a pump housing section configured to be connected to a mating housing section of the pump to together form the pump housing of said pump. A technical benefit may include providing an integrated housing for the pump, reducing assembly complexity and allowing for a more compact solution.

Optionally in some examples, including in at least one preferred example, the component mounting interface may comprise a pump housing mounting for mounting of the mating housing section. A technical benefit may include ensuring precise alignment and secure attachment of the pump housing, enhancing operational stability.

Optionally in some examples, including in at least one preferred example, the component mounting interface may be configured to accommodate mounting of one or more electrical components associated with the powertrain system connected to a power source of the powertrain system by means of electrical circuitry. A technical benefit may include facilitating the integration of electrical components, improving system functionality and ease of maintenance.

Optionally in some examples, including in at least one preferred example, the body portion may be provided with one or more electrical ground connections. A technical benefit may include ensuring proper grounding and electrical safety for the system in a space-efficient manner.

Optionally in some examples, including in at least one preferred example, the coolant connection interface may be configured to be releasably connected to two or more cooling system components of the cooling system such that coolant is distributed between the one or more cooling system components via at least one of the one or more integrated coolant channels, wherein a first cooling system component of the two or more cooling system components is a pump and a second cooling system component of the two or more cooling system components is a heat exchanger and wherein the component mounting interface is configured to form a pump housing section configured to be connected to a mating housing section of the pump to together form the pump housing of said pump. A technical benefit may include allowing for an easily installed and serviced cooling system. Another technical benefit may include allowing for a more space efficient cooling system.

According to a second aspect of the disclosure, a power train system is provided. The powertrain system comprises at least one thermally managed component and a cooling system, the cooling system comprising an interface member of any of the examples described herein. The second aspect of the disclosure may seek to address the complexity of traditional cooling systems of powertrain systems by providing solution allowing for a modular system. A technical benefit may include simplifying the assembly and maintenance process over traditional systems that rely on multiple discrete components and external piping.

Optionally in some examples, including in at least one preferred example, the at least one thermally managed component may comprise one or more of an electrical motor, an energy storage system, a transmission system, a power takeoff unit, a control unit, a compressor, a power converter unit, an on board charger unit and/or an electrical power supply. A technical benefit may include enabling cooling of a powertrain component in a simple and modular manner.

Optionally in some examples, including in at least one preferred example, the support mounting interface may be configured to be mounted to a chassis. A technical benefit may include ensuring secure attachment and stability of the interface member.

Optionally in some examples, including in at least one preferred example, the cooling system may be a liquid cooling system. A technical benefit may include providing efficient and effective thermal management through liquid cooling, improving overall system performance and longevity.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a block diagram of an exemplary powertrain system according to an example.
**FIG. 2** is a block diagram of an exemplary powertrain system according to a more detailed example.
**FIG. 3** is a block diagram of an interface member and connected components according to an example.
**FIG. 4** is a perspective view of an interface member according to one example.
**FIG. 5A** is a cross-section view of the interface member of **FIG. 4** according to one example.
**FIG. 5B** is another cross-section view of the interface member of **FIG. 4** according to one example.
**FIG. 6A** is a perspective view of a pump of a cooling system according to an example.
**FIG. 6B** is a cross-section view of the pump of **FIG. 6A** according to an example.
**FIG. 7A** is a cross-section view of aspects of a coolant connection interface of the interface member according to an example.
**FIG. 7B** is another cross-section view of aspects of a coolant connection interface of the interface member according to another example.
**FIG. 8** is a perspective view of a ground connection interface of the interface member according to an example.

### DETAILED DESCRIPTION

The detailed description set forth below provides information and examples of the disclosed technology with sufficient detail to enable those skilled in the art to practice the disclosure.

The present disclosure relates to cooling systems for cooling components of a powertrain system.

A powertrain system is a fundamental component of any vehicle or machinery that encompasses all the elements responsible for generating power and delivering it to the point of application, whether it be road surface, water, or industrial machinery. This system typically includes the engine or motor, transmission, drive shafts, differentials, and the final drive components such as wheels, propellers, or other output mechanisms. Essentially, the powertrain system converts the energy from the engine or motor into mechanical power that moves the vehicle or operates the machinery.

Examples of powertrain systems vary depending on the type of application and its propulsion technology. In traditional internal combustion engine (ICE) vehicles, the powertrain system includes the engine, gearbox, driveshaft, and differential. For electric vehicles (EVs), the powertrain system comprises the electric motor, battery pack, power electronics, and transmission. Hybrid vehicles combine elements from both ICE and EV powertrains, including an internal combustion engine, electric motor, battery, and transmission system.

In marine applications, powertrain systems are critical for the propulsion and maneuvering of vessels. These systems typically include marine engines, gearboxes, propeller shafts, and propellers. Marine powertrain systems must be robust and reliable to withstand the harsh operating conditions at sea and ensure the safe and efficient operation of the vessel.

In industrial applications, powertrain systems are used to drive machinery and equipment in various sectors, including manufacturing, construction, and agriculture. These systems may include engines or motors, transmissions, drive shafts, and final drive components such as wheels, tracks, or conveyor belts. Industrial powertrain systems are designed to deliver precise and efficient power to operate heavy machinery and equipment under demanding conditions.

Traditional cooling systems for powertrain systems typically involve multiple discrete components connected through a series of external piping or tubing, which suffer from several significant drawbacks. These include a complexity that increases the risk of leaks, pressure drops, and malfunctions, leading to higher installation costs and longer assembly times. Moreover, the lack of integration and modularity in these systems often results in space constraints within the powertrain system, making it challenging to accommodate other necessary components or to maintain a desirable form factor. Additionally, the cooling performance of traditional systems is often suboptimal due to inefficient heat transfer and distribution mechanisms. Maintenance and servicing of conventional cooling systems can also be cumbersome and time-consuming, as the multitude of connections and interfaces requires careful inspection and potential replacement of several parts during routine maintenance, increasing downtime and operational costs.

The present disclosure relates to an interface member intended for a cooling system for a powertrain system intended to address at least some of the above discussed challenges and drawbacks.

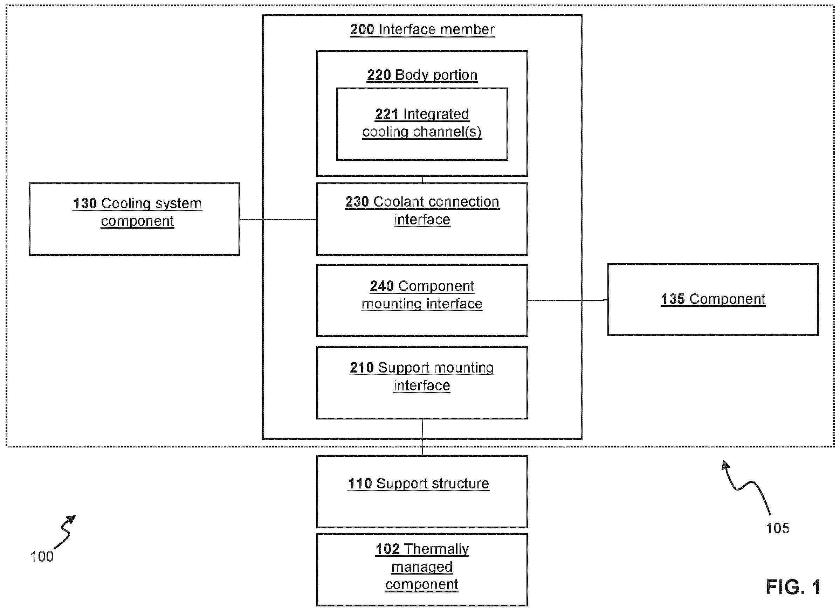

**FIG. 1** shows a schematic block diagram of an exemplary powertrain system **100** with an interface member **200** according to one example.

An interface member **200** for a cooling system **105** for cooling least one thermally managed component **102** is provided. The thermally managed component **102** is intended to form a part of a powertrain system **100.** The interface member **200** includes several integral features which will be described in further detail.

The interface member **200** comprises a support mounting interface **210,** a body portion **220** provided with internal integrated coolant channels **221,** a coolant connection interface **230,** and a component mounting interface **240.**

The support mounting interface **210** is configured to be mounted to a support structure **110.** The body portion **220** is provided with one or more internal integrated coolant channels **221** for forming at least a portion of the cooling circuitry of the cooling system **105.** The coolant connection interface **230** is in fluid communication with the one or more integrated coolant channels **221.** The coolant connection interface **230** is configured to be releasably connected to one or more cooling system components **130** of the cooling system **105.** The one or more cooling system components **130** are connected to the cooling circuitry for coolant distribution between the one or more cooling system components **130** and the cooling circuitry. The component mounting interface **240** is provided for mounting of one or more component **135** associated with the powertrain system **100.**

By integrating these elements into a single, cohesive unit, the interface member may simplify the overall design and installation process. This reduces the complexity and number of individual parts involved, thereby minimizing the risk of leaks and malfunctions. The integrated design may also enhance the system's modularity, allowing for a more compact and streamlined arrangement that can accommodate other necessary components within the powertrain system more easily. The ease of assembly and disassembly provided by the releasable connections simplifies maintenance procedures, reducing downtime and operational costs.

The interface member may offer several technical benefits over prior art solutions. Firstly, it may enhance cooling efficiency and simplifies the assembly and maintenance process, addressing the primary issues of complexity and inefficiency in traditional systems. Secondly, it may provide improved flexibility in connecting multiple cooling system components, enhancing overall system adaptability. Thirdly, it may improve thermal management for critical components, improving performance and longevity. Fourthly, it may facilitate the integration of various powertrain components, simplifying system design and maintenance. Fifthly, it may provide versatile mounting options for various critical components, enhancing overall system functionality.

A thermally managed component **102** may herein refer to a component to be receiving cooling from the cooling system **100,** e.g. a component cooled by means of the cooling system **105.** The cooling circuitry of the cooling system **100** may thus be routed to the thermally managed component **102.** As will be described in further detail, the thermally managed component **102** may any type of component intended to form a part of the powertrain system **100.**

The term powertrain system **100** is herein broadly applied to any type of system intended to drive an output component. Accordingly, the powertrain system **100** may be a vehicle powertrain system for propelling a vehicle. The vehicle may for example be a heavy-duty vehicle, such as truck, bus, or construction equipment, among other vehicle types. The powertrain system **100** may be a marine powertrain system for propelling a marine vessel. The powertrain system **100** may be an industrial powertrain system for industrial applications, e.g. for driving an output mechanism, the output mechanism may be a power plant, a power take off unit etc. The thermally managed component **102** may thus be any component intended to form a part of such a powertrain system **100.**

Depending on the type of powertrain system **100,** the one or more thermally managed component **102** may differ. For example, it may be envisioned that the one or more thermally managed component **102** may comprise at least one of a control unit, a compressor, a power converter unit, an on board charger unit, an electrical power supply, an engine, an electrical motor, an energy storage system such as a battery system, a transmission system and a power take off unit.

As aforementioned, the support mounting interface **210** provided may be configured to be mounted to a support structure **110** for supporting the interface member **200.** The support structure **110** may be form a part of the powertrain system **100** but may preferably be arranged independently from the powertrain system **100** to improve easy of assembly, service and installation. For example, the support structure **110** may be in the form of a chassis, for example a chassis of a vehicle, marine vessel or industrial machine.

Cooling circuitry may herein refer to fluid distribution circuitry intended to distribute the coolant between the components of the cooling system **105,** e.g. the cooling system components **130.** The cooling circuitry may thus comprise one or more fluid lines configured to connect the components of the cooling system **105,** e.g. the cooling system components **130,** to enable fluid communication. The cooling circuitry may comprise (in addition to the internal integrated coolant channels **221** any type of conventional fluid connections such as hosing, piping or tubing. It may also be envisioned that the one or more integrated internal coolant channels **221** comprise the entirety of the cooling circuitry of the cooling system **105,** i.e. that the one or more integrated internal coolant channels **221** directly connects to the one or more cooling system components **130** without any intermediate fluid connection means in-between.

Cooling system component **130** may herein refer to any component forming a part of the cooling system **105,** e.g. a component in fluid communication with the cooling circuitry. Hence, the cooling system component **130** may herein refer to any component intended to receive and/or discharge coolant from and/or to the cooling circuitry.

Worded differently, a cooling system component **130** may herein refer to any device or element that forms part of the cooling system **105.** The cooling system component **130** may be configured to contribute to the regulation, distribution, or dissipation of heat within the one or more thermally managed component **102.** Accordingly, the one or more cooling system components **130** may be for ensuring that the one or more thermally managed components **102** operate within desirable temperature ranges.

As the skilled person is aware a large variety of such components may be envisioned. For example, the at least one cooling system component **130** may for example comprise a pump such as a coolant pump or a heat exchanger such as a radiator, oil cooler or intercooler.

Advantageously, the cooling system **100** may be a liquid cooling system. The coolant may accordingly be for example water-, oil- or glycol-based or any mixtures thereof.

The component mounting interface **240** may be configured to accommodate for mounting of one or more component **135** associated with the powertrain system **100.** The component mounting interface **240** may be configured to accommodate for mounting of said component **135** to the body portion **220.**

A component **135** associated with the powertrain system **100** may herein refer to any type of functional component of the powertrain system **100.** For example, the component **135** may be a cooling system component **130** or may be a component intended to be cooled by means of the cooling system **105** such as at least one of the one or more thermally managed components **102** or a component not forming a part of the cooling system **105** or being cooled by the cooling system and providing other functionality to the powertrain system **100.**

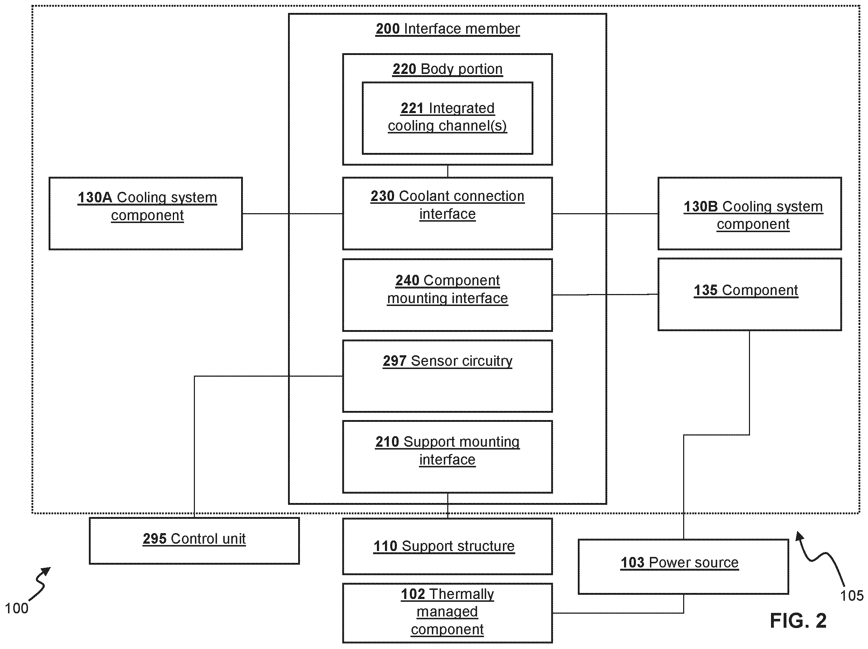

**FIG. 2** shows a schematic block diagram of an exemplary powertrain system **100** with an interface member **200** according to a more detailed example.

As depicted in **FIG. 2****,** the coolant connection interface **230** may be configured to be releasably connected to two or more cooling system components **130** of the cooling system **105.** Accordingly, a first cooling system component **130A** and a second cooling system component **130B** may be provided. The coolant connection interface **230** may be configured to be releasably connected to the two or more cooling system components, e.g. the first and second cooling system component **130A-B,** such that coolant can be distributed between the one or more cooling system components **130,** e.g. the first and second cooling system component **130A-B.** The coolant may be distributed via at least one of the one or more integrated coolant channels **221.**

Further referencing **FIG. 2****,** the component mounting interface **240** is as previously explained configured to accommodate for mounting of one or more components **135** associated with the powertrains system **100.**

In one example, the component mounting interface **240** may be configured to support at least one of the one or more cooling system components **130.**

In one example, the component mounting interface **240** may be configured to support at least one thermally managed component **102,** e.g. at least one thermally managed component **102** configured to be cooled by means of the cooling system **105.**

In one example, the component mounting interface **240** may be configured to support at least one component associated with the operation of the powertrain system **100.**

In one example, the component mounting interface **240** may be configured to accommodate mounting of one or more electrical components. The electrical components may be associated with the powertrain system **100.** The electrical components may be connected to, e.g. electrically connected to, a power source **103** of the powertrain system **100.** The one or more electrical components may be connected to the power source **103** by means of electrical circuitry **290.** The power source **103** may be any type of conventional power source such as a fuel cell system or a battery system.

For example, the one or more component **135** associated with the powertrain system **100** may comprise a control unit, a pump, a compressor, a power converter unit, an on board charger unit, an electrical power supply and/or a heat exchanger.

Further referencing **FIG. 2****,** the interface member **290** may comprise sensor circuitry **297.** The sensor circuitry **297** may be configured to monitor the operation of the cooling system **105.** The sensor circuitry 297 may comprise one or more sensors configured to monitor said operation of the cooling system **105.** To exemplify, the sensor circuitry **297** may comprise one or more temperature sensors configured to monitor the temperature of the coolant and/or one or more flow sensors configured to monitor the flow of the coolant. The sensor circuitry **297** may comprise one or more sensors arranged in the internal integrated coolant channel(s) **221** for monitoring parameters relating the coolant flowing through said internal integrated coolant channel(s).

In one example, a control unit **295** may be provided. The control unit **295** may be configured to control the cooling system **105.** In one example, the control unit **295** may be configured to control at least one of the one or more cooling system components **130.** It may be envisioned that the control unit **295** may be considered a component associated with the operation of the powertrains system **100** as described above.

In one example, the component mounting interface **240** may be configured to receive and support the control unit **295.** The component mounting interface **240** may be configured to accommodate for mounting of the control unit **295** to the interface member **200,** e.g. the body portion **220.**

In one example, the sensor circuitry **297** may be configured to be in operative connection with the control unit **295.** The control unit **295** may be configured to control the cooling system **105** based on sensor data obtained from the sensor circuitry 297.

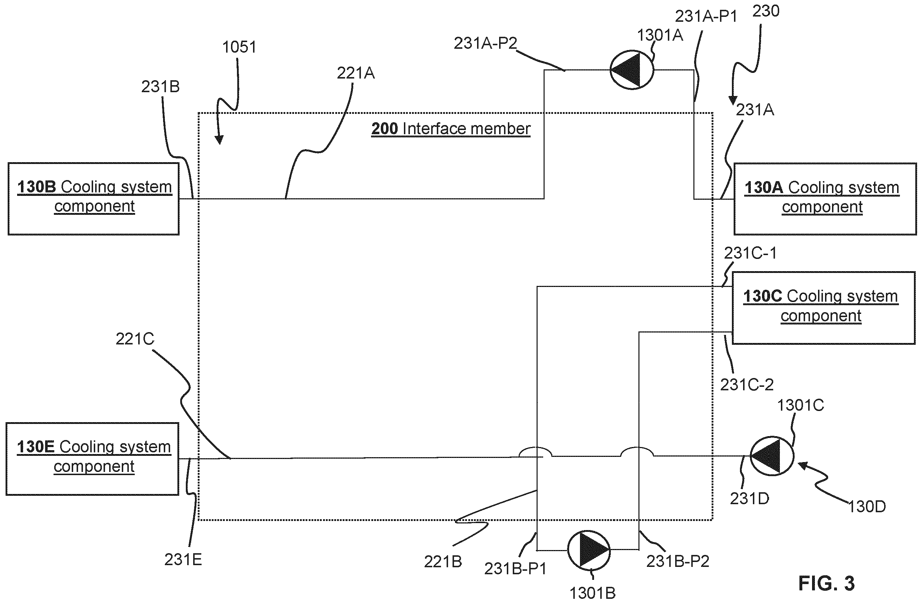

**FIG. 3** schematically depicts an example of the cooling system **105** in further detail.

For exemplifying purposes, **FIG. 3** depicts a plurality of cooling system components **130** being connected to, e.g. in fluid communication with, the one or more internal integrated coolant channels **221.**

In the depicted example, the cooling system **105** comprises cooling circuitry **1051.** The one or more internal integrated coolant channels **221** may be configured to form a part of the cooling circuitry **1051.**

The coolant connection interface **230** may comprise a plurality of coolant connections **231.** The plurality of coolant connections may be configured to be releasably connected to the one or more cooling system components **130** of the cooling system **105.** The plurality of coolant connections **231** may be configured to establish releasable fluid communication with the one or more cooling system components **130.**

Referencing **FIG. 3****,** each integrated coolant channel **221** may be connected to, e.g. in fluid communication with, a first and second coolant connection **231.** The first and second coolant connection **231** may configured to be releasably connected to a cooling system component **130.**

Advantageously, the body portion **220** may be provided with a plurality of integrated coolant channels **221.** Each integrated coolant channel **221** may be connected to a first and second coolant connection **231** configured to be releasably connected to a cooling system component **130** such that a plurality of cooling system components **130** may be selectively connectable to the coolant connection interface **230.**

In the example depicted in **FIG. 3****,** a plurality of integrated coolant channels **221** are provided. The plurality of integrated coolant channels **221** may be arranged as parallel integrated coolant channels, e.g. the integrated coolant channels **221** may not be in fluid communication with each other.

Please note that the numbering of the components discussed with reference to **FIG. 3** is only exemplary, it may be envisioned that any of the of components may be omitted and/or introduced in any order, e.g. as first, second, third etc.

One of the integrated coolant channels **221,** e.g. a first integrated coolant channel **221A** may be configured to fluidly interconnect, e.g. accommodate for fluid communication between, a first cooling system component **130A** and a second cooling system component **130B.**

The first integrated coolant channel **221A** may be configured to be connected to a first associated coolant connection **231A** and a second associated coolant connection **231B.** The first coolant connection **231A** may be configured to be releasably connected to a first cooling system component **130A** and the second coolant connection **231B** may be configured to be releasably connected to a second cooling system component **130B.** The first integrated coolant channel **221A** may thus accommodate for fluid communication between the first cooling system component **130A** and the second cooling system component **130B.**

In the depicted example, the first integrated coolant channel **221** may be configured to be connected to a pump **1301A** of the cooling system **105,** e.g. a pump **1301A** connected to the cooling circuitry **1051.** The pump **1301A** may be arranged between the first cooling system component **130A** and the second cooling system component **130B.** The pump **1301** may be configured to control the flow of coolant between the first cooling system component **130A** and the second cooling system component **130B.** Notably, the pump **1301A** may be considered a cooling system component **130,** e.g. a third cooling system component 130 intended to be connected to the first integrated coolant channel **221.**

In one example, the coolant connection interface **230** may be configured to be releasably connected to said pump **1301A.** Accordingly, one or more coolant connections **231** may be configured to be connected to the pump **1301A.** In the depicted example, the first integrated coolant channel **221A** may be connected to a third coolant connection **231A-P1,** the third coolant connection may be configured to be releasably connected to an inlet of the pump **1301A.** In the depicted example, the first integrated coolant channel **221A** may be connected to a fourth coolant connection **231A-P2,** the fourth coolant connection **231A-P2** may be configured to be releasably connected to an outlet of the pump **1301A.**

One of the integrated coolant channels **221,** e.g. a second integrated coolant channel **221B** may be configured to be in fluid connection with, e.g. in fluid communication with, a single cooling system component, e.g. a third cooling system component **130C.**

The second integrated coolant channel **221B** may be configured to be connected to a first associated coolant connection **231C-1** and a second associated coolant connection **231C-2.** The first coolant connection **231C-1** may be configured to be releasably connected to a cooling system component, e.g. a third cooling system component **130C** and the second coolant connection **231C-2** may be configured to also be releasably connected to said cooling system component, e.g. the third cooling system component **130C.** Preferably, the first coolant connection interface **231C-1** may be configured to be releasably connected to an inlet of the cooling system component **130C.** Preferably, the second coolant connection interface **231C-2** may be configured to be releasably connected to an outlet of the cooling system component **130C.** The first integrated coolant channel **221A** may thus accommodate for fluid communication between an inlet and an outlet of the cooling system component **130C.**

In the depicted example, the second integrated coolant channel **221B** may be configured to be connected to a pump **1301B** of the cooling system **105,** e.g. a pump **1301B** connected to the cooling circuitry **1051.** The pump **1301B** may be arranged between the inlet and the outlet of the cooling system component **130C.** The pump **1301B** may be configured to control the flow of coolant between the inlet and the outlet of the cooling system component **130C.** Notably, the pump **1301C** may be considered a cooling system component **130** intended to be connected to the second integrated coolant channel **221B.**

In one example, the coolant connection interface **230** may be configured to be releasably connected to said pump **1301B.** Accordingly, one or more coolant connections **231** may be configured to be connected to the pump **1301B.** In the depicted example, the second integrated coolant channel **221B** may be connected to a third coolant connection **231B-P1,** the third coolant connection may be configured to be releasably connected to an inlet of the pump **1301B.** In the depicted example, the second integrated coolant channel **221B** may be connected to a fourth coolant connection **231B-P2.** The fourth coolant connection **231B-P2** may be configured to be releasably connected to an outlet of the pump **1301B.**

One of the integrated coolant channels **221,** e.g. a third integrated coolant channel **221C** may be configured to fluidly interconnect, e.g. accommodate for fluid communication between, a fourth cooling system component **130D** and a fifth cooling system component **130E.**

The third integrated coolant channel **221C** may be configured to be connected to a first associated coolant connection **231D** and a second associated coolant connection **231E.** The first coolant connection **231D** may be configured to be releasably connected to a fourth cooling system component **130D** and the second coolant connection **231E** may be configured to be releasably connected to a fifth cooling system component **130E.** The third integrated coolant channel **221E** may thus accommodate for fluid communication between the fourth cooling system component **130D** and the fifth cooling system component **130E.**

In the depicted example, the fourth cooling system component **130D** may be provided as a pump **1301C,** e.g. a pump **1301A** connected to the cooling circuitry **1051.** The pump **1301C** may be configured to control a flow of coolant to the fifth cooling system component **130E.**

As the skilled person recognizes, the cooling circuitry **1051** may extend and may be routed to cool the one or more thermally managed components **102.**

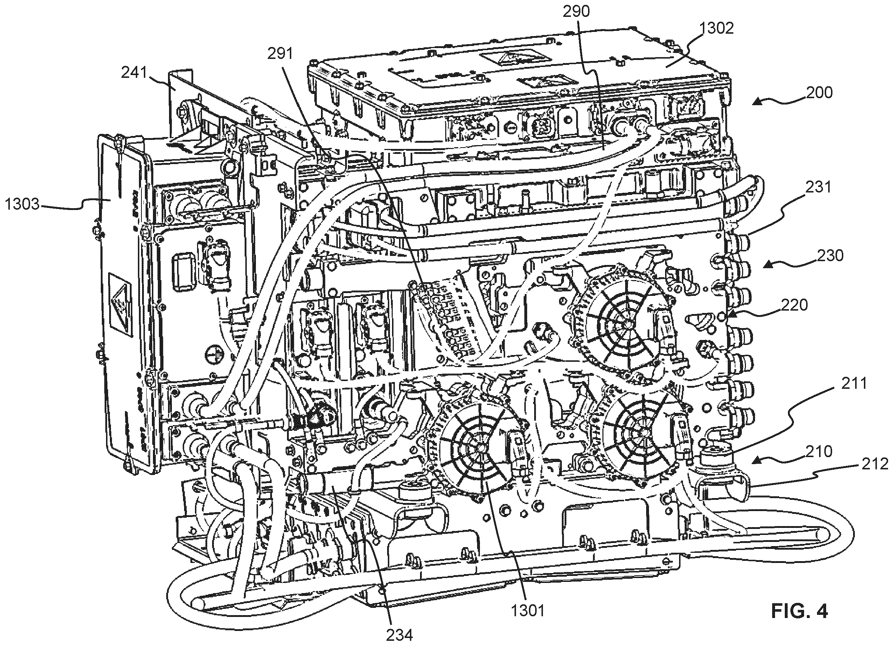

**FIG. 4** depicts an interface member **200** according to an example.

The interface member **200** may form a unit for mounting to a support structure. The interface member **200** may be configured to form a node in a powertrain system **100,** e.g. for a cooling system **105** of a powertrain system **100.** The interface member **200** may thus be configured to be in releasable fluid connection with one or more cooling system components.

In one example, the interface member **200** may be molded, e.g. formed by means of molding. According to such an example, the one or more internal integrated coolant channels **221** may be integrally formed in the molding process. This may for example be achieved by means of inserts in the die.

In one example, the interface member **200** may be formed by a plurality of joined parts, whereby the one or more internal integrated coolant channels **221** may be formed by machined portions in one or more of said parts.

As aforementioned, the interface member **200** may comprise a support mounting interface **210** configured to be mounted to the support structure **110** for supporting the interface member **200.** In one example, the support mounting interface **210** may be configured to rest on top of the support structure **110** upon mounting to enable easy assembling.

The component mounting interface **240** may comprise one or more brackets **241.** The one or more brackets **241** may be mounted to the body portion **220.** The one or more brackets **241** may be configured to provide a mounting surface for the one or components **135** associated with the powertrain system **100.** The one or more brackets **241** may be configured to receive one or more fastening elements for mounting of the component to said bracket(s) **241.**

In the depicted example, the support mounting interface **210** may comprise one or more flanged portions **212** adapted to abut to the support structure **110** and be fixated relative to the support structure **110** by means of one or more fastening elements **211.** The one or more flanged portions **212** may be formed as protruding flanges, e.g. horizontal protruding flanges, of the body portion **220.** The one or more fastening elements **211** may be provided in the form of screws or bolts. In one example, the one or more flanged portions **212** may be provided with holes for receiving said one or more fastening elements **211.** It may however be envisioned that other types of fastening elements may be utilized such as clamping elements etc.

In the depicted example, one or more electrical components **1302, 1303** are provided. The one or more electrical components **1302, 1303** may be mounted to the interface member **200.** Hence, the component mounting interface **240** may be configured to accommodate mounting of the one or more electrical components **1302, 1303.** The one or more electrical components **1302, 1303** may be connected to the previously described power source **103.** The one or more electrical components **1302, 1303** may be electrically connected to the power source **103** by means of electrical circuitry **290.**

In the depicted example, a first electrical component **1302** and a second electrical component **1303.** The component mounting interface **240** may be configured to enable mounting of said first electrical component **1302** and second electrical component **1303.** As depicted, the first electrical component **1302** and the second electrical component **1303** may be electrically connected by means of electrical circuitry. In the depicted example, the first electrical component **1302** and the second electrical component **1303** may be electrically connected by means of quick connect electrical wiring. Further, the first and/or second electrical component may be connected to the power source **1303** by means of quick connect electrical wiring.

Although a plurality of electrical components may be envisioned, **FIG. 4** depicts a first electrical component **1302** provided as an onboard charger unit and/or an electrical power supply, preferably a combined onboard charger unit and electrical power supply, and a second electrical component **1303** provided as a power converter unit. The onboard charger unit **1303** may be configured to be electrically connected to the power source **103** and may be configured to provide DC-charging to the power source **103.** The combined onboard charger unit and electrical power supply **1302** may be electrically connected to the power converter unit **1303** for charging the power source **103.** The combined onboard charger unit and electrical power supply **1302** may be configured to be electrically connected to an external power supply for charging the power source **103.** In the depicted example, the combined onboard charger unit and electrical power supply **1302** may be bi-directional, e.g. it may be configured to transfer power to the power source **103** for charging of the power source **103** and transfer power from the power source **103** to power components of the powertrain system **100.**

In the depicted example, the component mounting interface **240** may be configured to accommodate for mounting of at least one pump **1301.** According to the depicted example, the at least one pump **1301** may be electrically connected to the combined onboard charger unit and electrical power supply **1302** for powering of said at least one pump **1301.** The electrical circuitry **290** may thus be configured to electrically connect the onboard charger unit and electrical power supply **1302** and the at least one pump **1301.**

The coolant connection interface **230** may comprise a plurality of coolant connections **231, 234.** The coolant connections **231, 234** may be configured to be releasably connected to the one or more cooling system components **130** of the cooling system **105.**

Depending on the intended application of the coolant connection interface **230** and consequently the plurality of coolant connections **231, 234** may be arranged in a plurality of ways to accommodate for simple assembling of the cooling system and space efficiency. It may for example be envisioned that the coolant connection interface **230** may comprise one or more groups of coolant connections **231, 234** distributed at different positions relative the body portion **220.** Each group may comprise one coolant connection or a plurality of coolant connections grouped together.

In the depicted example, the coolant connection interface **230** may comprise a first coolant connection interface portion. The first coolant connection interface portion may comprise a plurality of coolant connections **231.** The plurality of coolant connections **231** may be distributed side-by-side relative each other to enable easy connection with the one or more cooling system components **130.**

It may further be envisioned that certain types of cooling system components **130** may due to space constraints or the overall design of the powertrain system **100** preferably be intended to be connected to the coolant connection interface **230** at a separate location. The coolant connection interface **230** may accordingly for example comprise a second coolant connection interface portion. In the depicted example, the second coolant connection interface portion comprises at least one coolant connection **234.** In the depicted example, the at least one coolant connection **234** may be configured to be releasably connected to a heat exchanger of the cooling system **105** such as a radiator.

It may for example be envisioned that the first coolant connection interface part and the second coolant connection interface part are arranged at opposite sides of the body portion **220.** In the depicted example, the first and second coolant connection interface part may be arranged at opposite vertical sides of the body portion **220.**

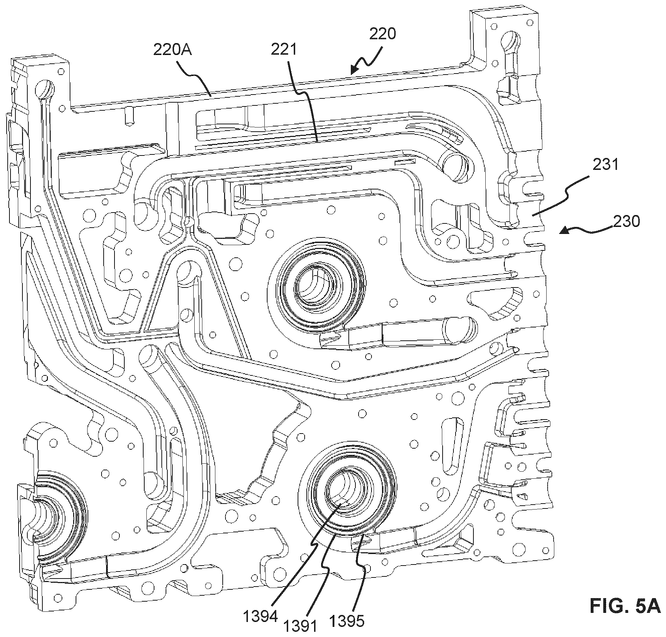

**FIG. 5A-B**depicts cross-sections of the body portion **220** depicted in **FIG. 4****.** In the depicted example, the cross-sections corresponds to parts mounted together to form the body portion **220** and the one or more internal integrated coolant channel **221,** but it may be envisioned that the cross-section views are schematic cross-section views of a molded body portion **221.**

The component mounting interface **240** may be configured to accommodate for mounting of at least one pump **1301.** In the depicted example, three pumps **1301** are mounted to the component mounting interface **240.**

The body portion **220** may be provided with at least one pump inlet **1394** and/or pump outlet **1395.** The pump inlet **1394** and the pump outlet **1395** may be considered to form a part of the coolant connection interface **230** and the pump **1301** may be considered a cooling system component **135** as described herein. Accordingly, the pump inlet **1394** and/or the pump outlet **1395** may be considered a coolant connection **231** as described herein.

In one example, the at least one pump **1301** may be a displacement pump. In one example, the pump inlet **1394** may extend in a direction substantially parallel with the rotation axis of the impeller of the pump **1301.** In one example, the pump outlet **1395** may extend in a direction substantially tangential to the impeller.

The at least one pump inlet **1394** may be connected to, e.g. in fluid communication with, at least one coolant connection **231.** The pump inlet **1394** may be configured to form an inlet of the pump **1301** to be mounted to the component mounting interface **240.**

The at least one pump outlet **1395** may be connected to, e.g. in fluid communication with, at least one coolant connection. The pump outlet **1395** may be configured to form an outlet of the pump **1301** to be mounted to the component mounting interface **240.**

The at least one pump **1301** may be arranged and connected to the one or more internal integrated cooling channels **221** according to any of the examples described with reference to **FIG. 3** herein.

To allow for a more compact cooling system **105,** the one or more pumps **1301** may be at least partially integrated in the interface member **200.** The housing of the pump **1301,** e.g. the pump housing of at least one of the one or more pumps **1301** may be at least partially integrated in the interface member **200.**

To achieve the at least partial integration, the component mounting interface **240** may be configured to form a pump housing section **1391.** The pump housing section **1391** may be configured to be connected to a mating housing section of the pump **1301** to together form the pump housing of the pump **1301.**

In one example, the pump housing section **1391** may be provided as a recessed portion provided in the body portion **220.** In the depicted example, the pump inlet **1394** is formed as an aperture in the recessed portion. Additionally or alternatively, the pump inlet **1394** may be formed as an aperture in the recessed portion.

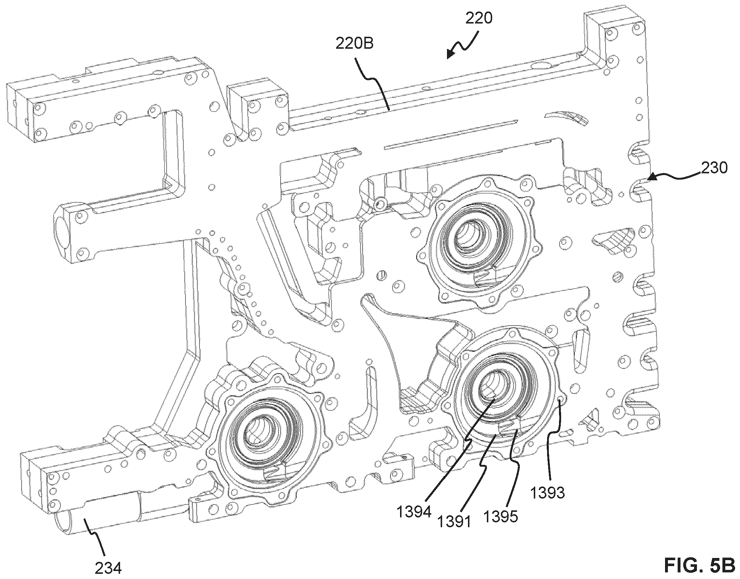

As visible in **FIG. 5B****,** the component mounting interface **240** may comprise a pump housing mounting **1393** for mounting of the mating housing section **1392.** The pump housing mounting **1393** may be provided as a mounting flange. The mounting flange may form an annular rim enveloping the pump housing section **1391.** Advantageously, the pump housing mounting **1393** may comprise one or more holes configured to receive fastening elements such as screws or bolts for mounting of the mating housing section.

In one example, the coolant connection interface **230** may be configured to be releasably connected to two or more cooling system components **130** of the cooling system **105** such that coolant may be distributed between the one or more cooling system components **130** via at least one of the one or more internal integrated coolant channels **221.** A first cooling system component **130** may be the pump **1301** and the second cooling system component **130** may be a heat exchanger.

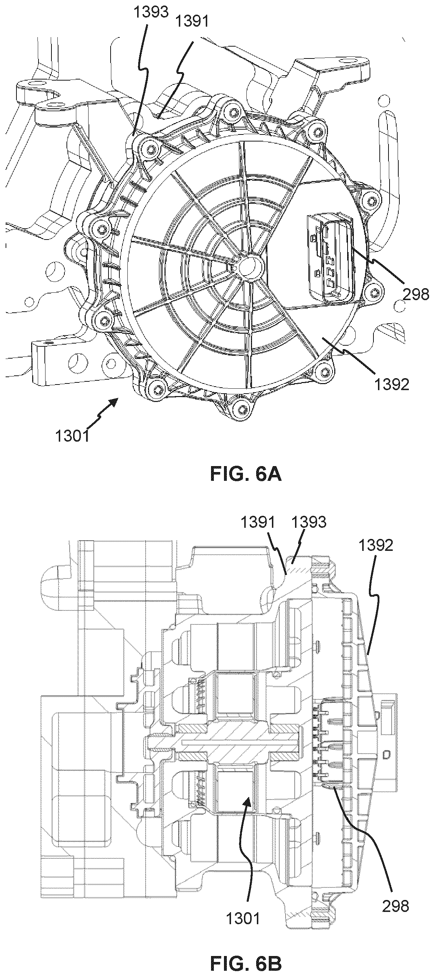

**FIG. 6A-B**depicts the pump **1301** when mounted to the interface member **200** in a perspective view and in a cross-section view.

Referencing said figures, the mating pump housing section **1392** may be configured to form a cover for sealing of the pump housing, e.g. for covering the pump housing section **1391.** In the depicted example, the pump inlet **1394** as well as the pump outlet **1395** may be provided as apertures in the pump housing sections **1391.** Accordingly, the mating housing section **1392** may be provided in the form of a cover for sealing off the recessed portion provided in the body portion **220** forming the pump housing section **1391.**

Further referencing **FIG. 6A-B****,** the pump **1301,** e.g. the mating housing section **1392,** may comprise a connector portion **298.** The connector portion **298** may be configured to be connected to the electric circuitry **290** for power transfer and/or data transfer to the pump **1301.**

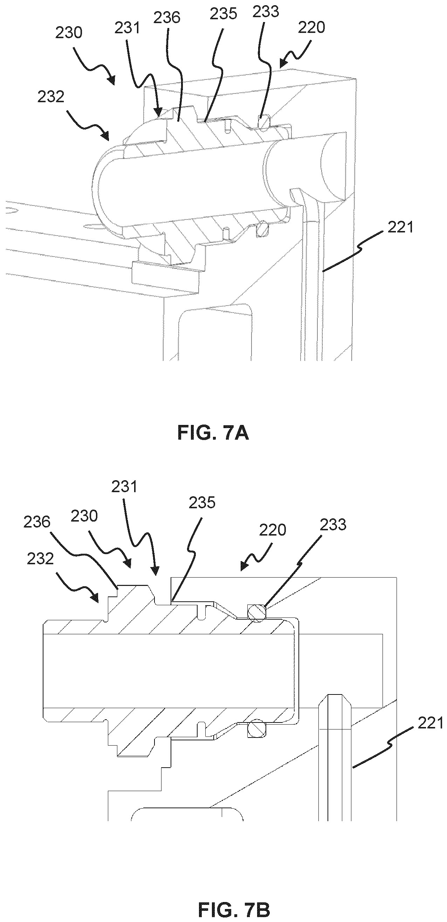

**FIG. 7A-B**depicts an exemplary coolant connection **231** of the interface member **200** in a side and perspective cross-section view.

The plurality of coolant connections **231** may be configured to form a part of a male-female fluid connection and/or a quick fluid connection. Hence, together with a mating connection, the coolant connections **231** may be configured to form such a male-female fluid connection and/or a quick fluid connection.

A quick fluid connection may be a coupling mechanism designed to facilitate rapid and secure attachment or detachment of fluid lines without the need for specialized tools. These connections typically feature a push-and-click or twist-lock mechanism, enabling efficient assembly and disassembly while maintaining a reliable and leak-proof seal.

A male-female fluid connection may involve a coupling system where one component, the male connector, fits snugly into another component, the female connector. This type of connection ensures a secure and leak-proof seal, allowing for efficient fluid transfer. The male connector typically has an external fitting that inserts into the corresponding internal fitting of the female connector.

It may however be envisioned that other releasable fluid connection means may be utilized. For example, the plurality of coolant connections **231,** i.e. one or more of the plurality of coolant connections **231,** may be configured to form a part of sleeve connection. According to such an example, the plurality of coolant connections **231** may form inserts to be positioned inside for example hose, tube or pipe to form a fluid connection.

In one example, hosing, tubing or piping may be avoided. Instead, the plurality of coolant connections **231,** i.e. one or more of the plurality of coolant connections **231,** may be configured to form docking fluid connections. Thus, at least one of the plurality of coolant connections **231** may be configured to releasably receive a cooling system component **130** such that fluid communication is established between the coolant connection **231** and the cooling system component **130.** For example, this may be achieved by insertion of the coolant connection **231** in a fluid port of the cooling system component **130** or vice versa.

The plurality of coolant connections **231** may comprise sealing arrangements **232.** The sealing arrangements may be configured to provide a sealed connection between the coolant connection **231** and the cooling system component **130.** Worded differently, the sealing arrangement **232** may be configured to seal around the established fluid communication upon the coolant connection **231** being connected with a cooling system component **130.** In one example, each coolant connection **231** may comprise a sealing arrangement **232.**

The coolant connection **231** may comprise a coolant connector portion **235** for establishing fluid communication with the cooling system component **135.** The coolant connector portion **235** may be mounted in the body portion **220.** In one example, the sealing arrangement may comprise a sealing collar **236,** the sealing collar **236** may be provided on the connector portion **235** or on the body portion. The sealing collar **236** may be configured to seal against an outer surface of the body portion **220** extending substantially perpendicular to the connector portion **235.** The sealing collar **236** may be provided on the connector portion **235.** The sealing collar **236** may be in the form of a radially protruding flange on the connector portion **235.**

In one example, the sealing arrangement **232** may comprise a gasket **233** arranged between the connector portion **235** and the body portion **220** to seal between said connector portion **235** and the body portion **220.**

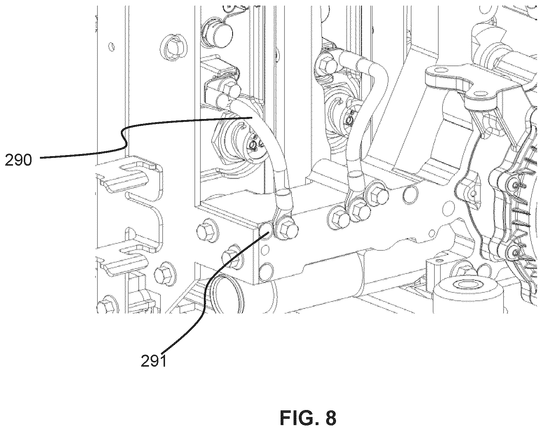

**FIG. 8** depicts a portion of the interface member **200** according to one example. In particular, **FIG. 8** depicts a part of the electric circuitry **290.**

In order to save space and provide additional functionality, the body portion **220** may be provided with one or more electrical ground connection **291.** The one or more ground connection **291** may be configured to be connected to the electrical circuitry **290.** The one or more ground connection **291** may be configured to electrically connect the electrical circuitry **290** to the ground. The one or more ground connection may be configured to provide a ground connection for example for an electrical component intended to be mounted to the interface member **200** by means of the component mounting interface **240.**

According to an aspect, an interface member, powertrain system, marine vessel, vehicle and/or stationary drive system according to any of the below examples may be provided.

Example 1: Interface member (200) for a cooling system (105) for cooling at least one thermally managed component (102) intended to form a part of a powertrain system (100), the interface member (200) comprising: a support mounting interface (210) configured to be mounted to a support structure (110) for supporting the interface member (200), a body portion (220) provided with one or more internal integrated coolant channels (221) for forming at least a portion of a cooling circuitry of the cooling system (105), a coolant connection interface (230) in fluid communication with the one or more integrated coolant channels (221) and configured to be releasably connected to one or more cooling system components (130) of the cooling system (105) connected to the cooling circuitry for coolant distribution between the one or more cooling system components (130) and the cooling circuitry, and a component mounting interface (240) for mounting of one or more components (135) associated with the powertrain system (100).

Example 2: The interface member (200) of Example 1, wherein the coolant connection interface (230) is configured to be releasably connected to two or more cooling system components (130) of the cooling system (105) such that coolant is distributed between the one or more cooling system components (130) via at least one of the one or more integrated coolant channels (221).

Example 3: The interface member (200) of Example 1 or Example 2, wherein the component mounting interface (240) is configured to support at least one of the one or more cooling system components (130).

Example 4: The interface member (200) of any of Example 1-Example 3, wherein the component mounting interface (240) is configured to support at least one thermally managed component (102) configured to be cooled by means of the cooling system (105).

Example 5: The interface member (200) of any of Example 1-Example 4, wherein the component mounting interface (240) is configured to support at least one component associated with the operation of the powertrain system (100).

Example 6: The interface member (200) of any of Example 1-Example 5, wherein the one or more components (135) associated with the powertrain system (100) comprises a control unit, a pump (1301), a compressor, a power converter unit (1303), an on-board charger unit and/or an electrical power supply (1302) and/or a heat exchanger.

Example 7: The interface member (200) of any of Example 1-Example 6, further comprising sensor circuitry (297) mounted to the body portion (220) and configured to monitor the operation of the cooling system (105).

Example 8: The interface member (200) of any of Example 1-Example 7, wherein the coolant connection interface (230) comprises a plurality of coolant connections (231, 234) configured to be releasably connected to the one or more cooling system components (130) of the cooling system.

Example 9: The interface member of Example 8, wherein the coolant connections (231, 234) comprise sealing arrangements (232) configured to provide a sealed connection between said coolant connection (231, 234) and the cooling system component (130).

Example 10: The interface member (200) of Example 8 or Example 9, wherein the plurality of coolant connections (231, 234) are configured to form a part of a male-female fluid connection and/or a quick fluid connection.

Example 11: The interface member (200) of any of Example 8-Example 10, wherein each integrated coolant channel (221) is connected to a first and second coolant connection (231, 234) configured to be releasably connected to a cooling system component (130).

Example 12: The interface member (200) of Example 11, wherein the body portion (220) is provided with a plurality of integrated coolant channels (221) each being connected to a first and second coolant connection (231, 234) configured to be releasably connected to a cooling system component (130) such that a plurality of cooling system components (130) are selectively connectable to the coolant connection interface (230).

Example 13: The interface member (200) of any of Example 8-Example 12, wherein the body portion (220) is provided with at least one pump inlet (1394) connected to at least one coolant connection (231, 234) and configured to form an inlet of a pump (1301) to be mounted to the component mounting interface (240).

Example 14: The interface member (200) of Example 13, wherein the body portion (220) is provided with at least one pump outlet (1395) connected to the at least one coolant connection (231, 234) and configured to form an outlet of the pump (1301).

Example 15: The interface member (200) of any of Example 8-Example 14, wherein the component mounting interface (240) is configured to form a pump housing section (1391) configured to be connected to a mating housing section (1392) of the pump (1301) to together form the pump housing of said pump (1301).

Example 16: The interface member (200) of Example 15, wherein the component mounting interface (240) comprises a pump housing mounting (1393) for mounting of the mating housing section (1392).

Example 17: The interface member (200) of any of Example 1-Example 16, wherein the component mounting interface (240) is configured to accommodate mounting of one or more electrical components (1302, 1303) associated with the powertrain system (105) connected to a power source (103) of the powertrain system (100) by means of electrical circuitry (290).

Example 18: The interface member (200) of any of Example 1-Example 17, wherein the body portion (220) is provided with one or more electrical ground connections (291).

Example 19: The interface member (200) of Example 1, wherein the coolant connection interface (230) is configured to be releasably connected to two or more cooling system components (130) of the cooling system (105) such that coolant is distributed between the one or more cooling system components (130) via at least one of the one or more integrated coolant channels (221), wherein a first cooling system component (130) of the two or more cooling system components (130) is a pump (1301) and a second cooling system component of the two or more cooling system components (130) is a heat exchanger and wherein the component mounting interface (240) is configured to form a pump housing section (1391) configured to be connected to a mating housing section (1392) of the pump (1301) to together form the pump housing of said pump (301).

Example 20: A powertrain system (100) comprising at least one thermally managed component (102) and a cooling system (105), the cooling system (105) comprising an interface member (200) of any of Example 1-Example 19.

Example 21: The powertrain system (100) of Example 20, wherein the at least one thermally managed component (102) comprises one or more of an electrical motor, an energy storage system, a transmission system, a power takeoff unit (PTO), a control unit, a compressor, a power converter unit (1303), an on-board charger unit and/or an electrical power supply (1302).

Example 22: The powertrain system (100) of Example 20 or Example 21, wherein the support mounting interface (210) is configured to be mounted to a chassis.

Example 23: The powertrain system (100) of any of Example 20-Example 22, wherein the cooling system (105) is a liquid cooling system.

Example 24: A vehicle comprising a powertrain system of any of Example 20-Example 23.

Example 25: A marine vessel comprising a powertrain system of any of Example 20-23.

Example 26: A stationary drive system comprising a powertrain system of any of Example 20-23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. Interface member (200) for a cooling system (105) for cooling at least one thermally managed component (102) intended to form a part of a powertrain system (100), the interface member (200) comprising:
- a support mounting interface (210) configured to be mounted to a support structure (110) for supporting the interface member (200),
- a body portion (220) provided with one or more internal integrated coolant channels (221) for forming at least a portion of a cooling circuitry of the cooling system (105),
- a coolant connection interface (230) in fluid communication with the one or more integrated coolant channel (221) and configured to be releasably connected to one or more cooling system components (130) of the cooling system (105) connected to the cooling circuitry for coolant distribution between the one or more cooling system components (130) and the cooling circuitry, and
- a component mounting interface (240) for mounting of one or more component (135) associated with the powertrain system (100).

2. The interface member (200) of claim 1, wherein the coolant connection interface (230) is configured to be releasably connected to two or more cooling system components (130) of the cooling system (105) such that coolant is distributed between the one or more cooling system components (130) via at least one of the one or more integrated coolant channels (221).

3. The interface member (200) of claim 1 or 2, wherein the component mounting interface (240) is configured to support at least one of the one or more cooling system components (130).

4. The interface member (200) of any of claim 1-3, wherein the component mounting interface (240) is configured to support at least one thermally managed component (102) configured to be cooled by means of the cooling system (105).

5. The interface member (200) of any of claim 1-4, wherein the one or more component (135) associated with the powertrain system (100) comprises a control unit, a pump (1301), a compressor, a power converter unit (1303), an on board charger unit and/or an electrical power supply (1302) and/or a heat exchanger.

6. The interface member (200) of any of claim 1-5, further comprising sensor circuitry (297) mounted to the body portion (220) and configured to monitor the operation of the cooling system (105).

7. The interface member (200) of any of claim 1-6, wherein the coolant connection interface (230) comprises a plurality of coolant connections (231, 234) configured to be releasably connected to the one or more cooling system components (130) of the cooling system (105).

8. The interface member (200) of claim 7, wherein each integrated coolant channel (221) is connected to a first and second coolant connection (231, 234) configured to be releasably connected to a cooling system component (130).

9. The interface member (200) of claim 8, wherein the body portion (220) is provided with a plurality of integrated coolant channels (221) each being connected to a first and second coolant connection (231, 234) configured to be releasably connected to a cooling system component (130) such that a plurality of cooling system components (130) are selectively connectable to the coolant connection interface (230).

10. The interface member (200) of any of claim 7-9, wherein the body portion (220) is provided with at least one pump inlet (1394) connected to at least one coolant connection (231, 234) and configured to form an inlet of a pump (1301) to be mounted to the component mounting interface (240).

11. The interface member (200) of any of claim 10, wherein the body portion (220) is provided with at least one pump outlet (1395) connected to the at least one coolant connection (231, 234) and configured to form an outlet of the pump (1301)

12. The interface member (200) of any of claim 7-11, wherein the component mounting interface (240) is configured to form a pump housing section (1391) configured to be connected to a mating housing section (1392) of the pump (1301) to together form the pump housing of said pump (1301).

13. The interface member (200) of any one of claims 1-12, wherein the body portion (220) is provided with one or more electrical ground connection (291).

14. The interface member (200) of claim 1, wherein the coolant connection interface (230) is configured to be releasably connected to two or more cooling system components (130) of the cooling system (105) such that coolant is distributed between the one or more cooling system components (130) via at least one of the one or more integrated coolant channels (221), wherein a first cooling system component (130) of the two or more cooling system components (130) is a pump (1301) and a second cooling system component of the two or more cooling system components (130) is a heat exchanger and wherein the component mounting interface (240) is configured to form a pump housing section (1391) configured to be connected to a mating housing section (1392) of the pump (1301) to together form the pump housing of said pump (301).

15. A powertrain system (100) comprising at least one thermally managed component (102) a cooling system (105), the cooling system (105) comprising an interface member (200) of any of claim 1-14.

## Amended claims

### Amended claims in accordance with Rule 137(2) EPC.

1. Interface member (200) for a cooling system (105) for cooling at least one thermally managed component (102) intended to form a part of a powertrain system (100), the interface member (200) comprising:
- a support mounting interface (210) configured to be mounted to a support structure (110) for supporting the interface member (200),
- a body portion (220) provided with one or more internal integrated coolant channels (221) for forming at least a portion of a cooling circuitry of the cooling system (105),
- a coolant connection interface (230) in fluid communication with the one or more integrated coolant channel (221) and configured to be releasably connected to one or more cooling system components (130) of the cooling system (105) connected to the cooling circuitry for coolant distribution between the one or more cooling system components (130) and the cooling circuitry, and
- a component mounting interface (240) for mounting of one or more component (135) associated with the powertrain system (100), wherein the one or more component (135) associated with the powertrain system (100) comprises a control unit, a power converter unit (1303), an on board charger unit and/or an electrical power supply (1302).

2. The interface member (200) of claim 1, wherein the coolant connection interface (230) is configured to be releasably connected to two or more cooling system components (130) of the cooling system (105) such that coolant is distributed between the one or more cooling system components (130) via at least one of the one or more integrated coolant channels (221).

3. The interface member (200) of claim 1 or 2, wherein the component mounting interface (240) is configured to support at least one of the one or more cooling system components (130).

4. The interface member (200) of any of claim 1-3, wherein the component mounting interface (240) is configured to support at least one thermally managed component (102) configured to be cooled by means of the cooling system (105).

5. The interface member (200) of any of claim 1-4, wherein the one or more component (135) associated with the powertrain system (100) further comprises a pump (1301), a compressor, and/or a heat exchanger.

6. The interface member (200) of any of claim 1-5, further comprising sensor circuitry (297) mounted to the body portion (220) and configured to monitor the operation of the cooling system (105).

7. The interface member (200) of any of claim 1-6, wherein the coolant connection interface (230) comprises a plurality of coolant connections (231, 234) configured to be releasably connected to the one or more cooling system components (130) of the cooling system (105).

8. The interface member (200) of claim 7, wherein each integrated coolant channel (221) is connected to a first and second coolant connection (231, 234) configured to be releasably connected to a cooling system component (130).

9. The interface member (200) of claim 8, wherein the body portion (220) is provided with a plurality of integrated coolant channels (221) each being connected to a first and second coolant connection (231, 234) configured to be releasably connected to a cooling system component (130) such that a plurality of cooling system components (130) are selectively connectable to the coolant connection interface (230).

10. The interface member (200) of any of claim 7-9, wherein the body portion (220) is provided with at least one pump inlet (1394) connected to at least one coolant connection (231, 234) and configured to form an inlet of a pump (1301) to be mounted to the component mounting interface (240).

11. The interface member (200) of any of claim 10, wherein the body portion (220) is provided with at least one pump outlet (1395) connected to the at least one coolant connection (231, 234) and configured to form an outlet of the pump (1301)

12. The interface member (200) of any of claim 7-11, wherein the component mounting interface (240) is configured to form a pump housing section (1391) configured to be connected to a mating housing section (1392) of the pump (1301) to together form the pump housing of said pump (1301).

13. The interface member (200) of any one of claims 1-12, wherein the body portion (220) is provided with one or more electrical ground connection (291).

14. The interface member (200) of claim 1, wherein the coolant connection interface (230) is configured to be releasably connected to two or more cooling system components (130) of the cooling system (105) such that coolant is distributed between the one or more cooling system components (130) via at least one of the one or more integrated coolant channels (221), wherein a first cooling system component (130) of the two or more cooling system components (130) is a pump (1301) and a second cooling system component of the two or more cooling system components (130) is a heat exchanger and wherein the component mounting interface (240) is configured to form a pump housing section (1391) configured to be connected to a mating housing section (1392) of the pump (1301) to together form the pump housing of said pump (301).

15. A powertrain system (100) comprising at least one thermally managed component (102) a cooling system (105), the cooling system (105) comprising an interface member (200) of any of claim 1-14.
